# EUROPEAN PATENT SPECIFICATION

(11) **EP 0 888 801 B1**
(45) Date of publication and mention of the grant of the patent: **23.07.2003**
(21) Application number: 98301584.3
(22) Date of filing: 04.03.1998
(51) Int. Cl.: B01D 33/056

(54) **Filter belt edge structure**
Kantenstruktur für Filterband
Bordure pour bande de filtres

(30) Priority: 03.07.1997 AU 2844397
(43) Date of publication of application: 07.01.1999
(73) Proprietor: Madison Filter 981 Limited, Blackburn, Lancashire BB2 6AY (GB)
(72) Inventor: Macquet, Anthony Joseph, Mount Eliza, Victoria 3930 (AU)
(74) Representative: Goodwin, Mark

(56) References cited:
- WO-A-93/12321
- DE-B- 1 025 387
- US-A- 3 840 122
- US-A- 5 391 427

## Description

This invention relates to edge structures of filter belts.

It is known for example to provide a drum filter belt with a rubber edge track which runs in guides to keep the filter cloth running perfectly straight. The rubber edge track is attached to a fabric reinforcement strip by means of several rows of stitching and the fabric reinforcement strip is in turn secured to the edge of the filter cloth.

In US 3327839, a conveyor apparatus is described wherein a reinforcement fabric is secured on top of each edge of a belt and a triangular sectioned rod is then secured to the top side of the reinforcement by bonding.

In US 5391427 a filter belt edge structure is proposed wherein the edge of a filter belt cloth is received between upper and lower rods of a two-ply fabric reinforcement strip and an elongate track is also received between the rods of a two-ply fabric strip along the opposite edge thereof. The reinforcement strip is welded to the track and welded or stitched to the filter cloth.

The various known edge structures are relatively complex and involve multiple stitching or bonding operations, and the presence of a reinforcing strip makes the edge region somewhat inflexible and an abrasion susceptible fabric region is present at the belt edges.

It is an object of the invention to provide a simplified filter belt edge structure with improved flexibility and abrasion resistance properties.

The invention therefore provides a filter belt edge comprising at least one length of fabric and an edge strip welded to at least one length edge of said fabric, the edge strip being bifurcated to provide a slot extending in the said plane to receive the said one edge of said fabric.

The edge strip is preferably formed with an edge track portion of a standard cross section which is compatible with the machine on which the fabric, e.g. a filter cloth is to be used. The edge strip and edge track portion are preferably integrally formed.

The bifurcation may define upper and lower flaps which are, after insertion of the said one edge of the fabric, in turn welded to respective upper and lower surfaces ofthe region of the fabric adjacent said one edge.

The bifurcation may be a slot formed in the free edge of said strip by means of a hot air knife, or preferably heated metal blade. The slot extends along the free edge, penetrating some way into the strip and preferably along the centre line and in the plane of the strip. Alternatively, the bifurcation may be formed by moulding it into the strip as the strip is produced by extrusion through a die.

The upper flap may be the first secured to the fabric, followed by the lower flap. The flaps may be secured to the fabric with the use of an adhesive or by thermal (eg hot air) or ultrasonic welding.

From another aspect, the invention provides an edge strip for a filter belt comprising a planar part for extending in the plane of the filter belt cloth, the planar part being bifurcated to provide a slot extending in said plane to receive an edge of a filter belt cloth.

A preferred embodiment of the invention will now be described by way of example and with reference to the accompanying drawings, wherein:-
Fig.1 is a cross-sectional view of an edge strip according to the further aspect of the invention, for a filter belt;
Fig.2 shows a first stage in forming the edge strip of fig. 1 in the construction of a filter belt edge structure according to the invention; and
Fig.3 is a cross sectional view of a completed edge structure of a filter belt in accordance with the invention.

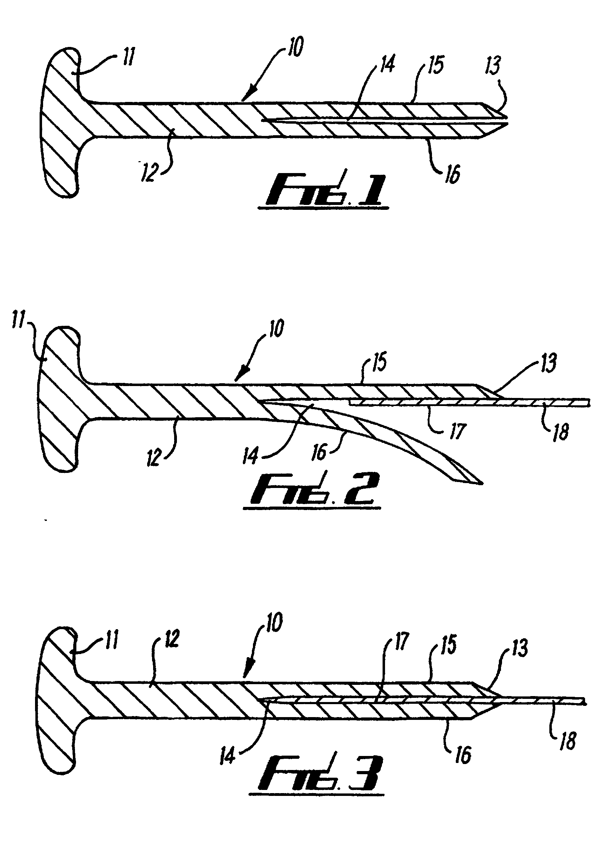

Referring first to fig. 1, an edge strip 10 for a filter belt comprises a rod like track portion 11 and a planar part 12 which is formed integrally with the track portion 11. The free edge 13 of part 12 opposite the track portion 11 is provided with a deep slot 14, which extends substantially along the centre line ofweb 12, along the length of the part and penetrating more than 50% of the distance from the edge 13 to the track portion 11. Slot 14 defines an upper flap 15 and a lower flap 16 and the slot 14 may be formed by use of a hot air knife or a metal blade.

As shown in fig.2, the edge strip 10 is mounted on an edge 17 of a filter cloth 18 of a belt filter by receiving the edge 17 of the cloth into slot 14 and then adhering the upper flap 15 to the upper surface of filter cloth 18 by means of an adhesive, thermal (eg hot air) or ultrasonic welding. The lower flap 16 may be bent down out of the way (as shown) during this operation.

To complete the edge structure, the lower flap 16 is then adhered in turn to the lower surface of the filter cloth 18 by the same method as used for the upper flap.

The resulting edge structure is shown in fig.3 wherein the edge 17 of filter cloth 18 is received in the slot 14 of the edge strip 10, which provides as a simple integral structure an edging strip composed by planar part 12 and a track rod 11.

This structure avoids the need to provide a separate edge track rod and an edge strip of eg fabric, and avoids the need for stitching or a multiple stage assembly operation. The structure also encapsulates the edge 17 of the belt cloth so that the edge is not exposed to abrasion or fraying, resulting in extended useful life for the filter cloth.

The edge strip 10 may be of natural or synthetic rubber or of any suitable flexible and hard wearing plastics material. Thermoplastics with rubber like properties and a significant polyolefine content (eg Polypropylene) are preferred, such as for example SANTROPENE (trade mark).

The fabric 18 may be a woven or nonwoven structure, typically a woven polypropylene monofilament fabric, between 1 and 20 metres long and made endless by steel seaming clips inserted into the belt ends, which clips are interdigitated and held together by a hinge wire.

The material of the edge strip 10 is preferably vulcanised to confer temperature stability to the strip and the material may also have an olefin content which suffers under heat so as to impart the degree of adhesion sufficient to enable the fabric edge to be permanently bonded to the edge strip material.

The slot 14 may extend, e.g. 30-80 mm into the strip, which may be 4-12 mm thick in the region of the slot.

## Claims

1. An edge structure for a filter belt comprising at least one length of fabric and an edge strip lying in the plane of the fabric, the edge strip being bifurcated to provide a slot extending in said plane to receive said one edge of the fabric.

2. An edge structure according to claim 1, wherein the edge strip comprises an edge track portion and planar part extending in the plane of the fabric, the edge track portion and the planar part being integrally formed.

3. An edge structure according to claim 1 or claim 2, wherein the bifurcation defines upper and lower flaps on the planar part which are, after insertion of the said one edge of the fabric, in turn welded to respective upper and lower surfaces of the region of the fabric adjacent said one edge.

4. An edge structure according to any preceding claim, wherein the bifurcation is a slot formed in the free edge of said strip by means of cutting means; said slot extending along the free edge and penetrating some way into the strip along or parallel to the centre line and in the plane of the strip.

5. An edge structure according to claim 1, 2 or 3, wherein the bifurcation is formed by moulding as the strip is extruded through a die.

6. An edge structure according to any preceding claim wherein the upper flap of the bifurcated edge strip has been first secured to the edge region of the fabric, followed by securement of the lower flap to said edge region.

7. An edge strip for a filter belt comprising a planar part for extending in the plane of the filter belt cloth, the planar part being bifurcated to provide a slot extending in said plane to receive an edge of a filter belt cloth.

8. An edge structure for a filter belt, including an edge strip according to claim 7.

9. A filter belt having an edge structure according to any one of claims 1 to 6 or claim 8.

## Patentansprüche

1. Randstruktur für einen Siebgurt, die mindestens ein Stück eines Gewebes und einen in der Ebene des Gewebes liegenden Randstreifen umfaßt, wobei der Randstreifen zweigeteilt ist, so daß ein sich in der Ebene erstreckender Schlitz zur Aufnahme des einen Randes des Gewebes gebildet ist.

2. Randstruktur nach Anspruch 1,
wobei der Randstreifen einen Randführungsteil und einen sich in der Ebene des Gewebes erstreckenden flachen Teil umfaßt, wobei der Randführungsteil und der flache Teil einstückig ausgebildet sind.

3. Randstruktur nach Anspruch 1 oder Anspruch 2,
wobei durch die Zweiteilung obere und untere Laschen an dem flachen Teil gebildet sind, die nach dem Einsetzen des einen Randes des Gewebes ihrerseits an entsprechende obere und untere Oberflächen des an den einen Rand angrenzenden Gewebebereiches angeschweißt werden.

4. Randstruktur nach einem vorhergehenden Anspruch,
wobei die Zweiteilung aus einem Schlitz besteht, der in dem freien Rand des Streifens mit Hilfe von Schneidvorrichtungen gebildet wird, wobei sich der Schlitz entlang des freien Randes erstreckt und sich entlang oder parallel zu der Mittellinie und in der Ebene des Streifens ein Stück weit in den Streifen hineinerstreckt.

5. Randstruktur nach Anspruch 1, 2 oder 3,
wobei die Zweiteilung durch Formguß hergestellt wird, wenn der Streifen durch eine Gießform extrudiert wird.

6. Randstruktur nach einem vorhergehenden Anspruch,
wobei die obere Lasche des zweigeteilten Randstreifens zuerst an dem Randbereich des Gewebes befestigt wird, gefolgt von der Befestigung der unteren Lasche an dem Randbereich.

7. Randstreifen für einen Siebgurt mit einem flachen Teil, der sich in der Ebene des Siebgurttuches erstreckt, wobei der flache Teil zweigeteilt ist, so daß ein sich in der Ebene erstreckender Schlitz zur Aufnahme eines Randes eines Siebgurttuches gebildet ist.

8. Randstruktur für einen Siebgurt mit einem Randstreifen nach Anspruch 7.

9. Siebgurt mit einer Randstruktur nach einem der Ansprüche 1 bis 6 oder Anspruch 8.

## Revendications

1. Structure de bord pour bande filtrante comportant au moins une longueur de tissu et une bande de bord située dans le plan du tissu, la bande de bord étant en forme de fourche pour fournir une fente s'étendant dans ledit plan pour recevoir un bord du tissu.

2. Structure de bord selon la revendication 1, dans laquelle la bande de bord comporte une partie de piste de bord et une partie plane s'étendant dans le plan du tissu, la partie de piste de bord et la partie plane étant formée en un seul bloc.

3. Structure de bord selon la revendication 1 ou 2, dans laquelle la forme de fourche définit des volets supérieur et inférieur sur la partie plane qui sont, après insertion dudit bord du tissu, à leur tour soudés sur des surfaces supérieure et inférieure respectives de la zone du tissu adjacente audit bord.

4. Structure de bord selon l'une quelconque des revendications précédentes, dans laquelle la forme de fourche est une fente formée dans le bord libre de ladite bande par l'intermédiaire de moyens de découpe, ladite fente s'étendant le long du bord libre et pénétrant sur une certaine distance dans la bande le long de la ligne centrale ou parallèlement à celle-ci et dans le plan de la bande.

5. Structure de bord selon la revendication 1, 2 ou 3, dans laquelle la forme de fourche est formée par moulage lorsque la bande est extrudée à travers une filière.

6. Structure de bord selon l'une quelconque des revendications précédentes, dans laquelle le volet supérieur de la bande de bord en forme de fourche est tout d'abord fixé sur la zone de bord du tissu, ce qui est suivi par la fixation du volet inférieur sur ladite zone de bord.

7. Bande de bord pour bande filtrante comportant une partie plane destinée à s'étendre dans le plan du tissu de bande filtrante, la partie plane étant en forme de fourche pour fournir une fente s'étendant dans ledit plan pour recevoir un bord du tissu de bande filtrante.

8. Structure de bord pour bande filtrante, comportant une bande de bord selon la revendication 7.

9. Bande filtrante ayant une structure de bord selon l'une quelconque des revendications 1 à 6 ou la revendication 8.
